# EUROPÄISCHE PATENTANMELDUNG

(11) **EP 4 843 778 A1**
(43) Veröffentlichungstag der Anmeldung: **25.11.2026**
(21) Anmeldenummer: 26169490.5
(22) Anmeldetag: 31.03.2026
(51) Int. Cl.: B32B 27/32, B32B 27/08, B32B 27/16

(54) **POLYOLEFIN-BASIERTE MEHRSCHICHTFOLIE, VERPACKUNGSBEUTEL SOWIE VERFAHREN ZUR HERSTELLUNG**

(30) Priorität: 20.05.2025 DE 102025119510
(71) Anmelder: Mondi AG, 1030 Wien (AT); Werner & Mertz GmbH, 55120 Mainz (DE)
(72) Erfinder: Neumann, Andreas, 33790 Halle (DE); Kösters, Jens, 49134 Wallenhorst (DE); Mayer, Matthias, 33739 Bielefeld (DE); Schau, Alexander, 55128 Mainz (DE)
(74) Vertreter: Andrejewski - Honke Patent- und Rechtsanwälte Partnerschaft mbB

(57) **Zusammenfassung**

Die Erfindung betrifft eine Polyolefin-basierte Mehrschichtfolie mit zwei Außenlagen (12) und einer zwischen den Auslagen angeordneten Kernlage (13), wobei die Kernlage (13) zumindest teilweise aus einem mechanisch recycelten Polyethylen hoher Dichte (rHDPE) gebildet ist. Die Kernlage (13) weist zwei Grundschichten (14) auf, welche über eine verblockte Verbindungsschicht miteinander verbunden sind und wobei die Grundschichten (14) zumindest teilweise aus dem mechanisch recycelten Polyethylen hoher Dichte gebildet sind.

## Beschreibung

Die Erfindung betrifft eine Polyolefin-basierte Mehrschichtfolie mit zwei Außenlagen und einer zwischen den Außenlagen angeordneten Kernlage, wobei die Kernlage zumindest teilweise aus einem mechanisch recycelten Polyethylen hoher Dichte (rHDPE) gebildet ist.

In der Praxis werden Polyolefin-basierte Kunststofffolien für eine Vielzahl von Produkten verwendet. Eine besonders herausragende Bedeutung kommt den Kunststofffolien als Verpackungsmaterial zu, da durch Wahl geeigneter Kunststoffe Verpackungen gebildet werden können, welche einerseits eine hohe mechanische Belastbarkeit aufweisen und zugleich kostengünstig als Massenartikel hergestellt werden können. Darüber hinaus lassen sich darin verpackte Füllgüter auch besonders günstig gegenüber äußeren Einflüssen abschirmen. Beispielsweise können die Kunststofffolien eine Wasserdampf- oder auch eine Fettbarriere bilden.

Vor diesem Hintergrund eignen sich Kunststofffolien sowohl zum Verpacken von Lebensmitteln als auch für die Aufnahme von Flüssigkeiten, wie beispielsweise Waschmittel, Shampoo, Conditioner, Reinigungsmittel oder sonstigen Haushaltschemikalien, wobei dieser Einsatzzweck lediglich exemplarisch ist. Bei den daraus hergestellten Verpackungen kann es sich insbesondere um Verpackungsbeutel, insbesondere sogenannte Standbodenbeutel, handeln.

Häufig ist als Material für die Beutelwand ein Kaschierverbund mit einer Innenlage aus Polyethylen (PE) und einer Außenlage auf der Basis von Polyethylenterephthalat (PET) oder biaxial orientiertem Polypropylen (BO-PP) vorgesehen, wobei eine Druckschicht bei einem solchen Kaschierverbund vor dem Verkleben der Innenlage mit der Außenlage innenliegend an der Kontaktfläche entweder auf die Innenlage oder die Innenfolie Außenlage wird und dann durch die transparente Außenlage sichtbar ist.

Derartige Verpackungsbeutel zeichnen sich durch ein besonders hochwertiges Erscheinungsbild und gute Funktionseigenschaften aus. Allerdings ist aufgrund der Kaschierung der unterschiedlichen Polymermaterialien ein sortenreines Kunststoff-Recycling nicht möglich, weshalb entsprechende Verpackungsbeutel als Einweg-Artikel nach ihrer Benutzung allenfalls verbrannt und damit thermisch verwertet werden können.

Die weltweit steigende Nachfrage nach derartigen Verpackungsbeuteln hat jedoch zur Folge, dass einerseits der Verpackungsmüll ansteigt und anderseits auch die fossilen Ausgangsstoffe zur Herstellung der Kunststofffolien zusätzlich die Umwelt belasten.

Vor diesem Hintergrund ist es in der Verpackungsindustrie ein Bestreben, mit Blick auf die hohen Nachhaltigkeitsziele einerseits den Einsatz fossiler Ausgangsstoffe zu reduzieren und zugleich den Verpackungsmüll in geeigneter Art und Weise in einen Kreislaufprozess zu überführen. Hierbei ist es bekannt, dass die Kunststofffolien in verschiedener Art und Weise recycelt werden können.

Im Rahmen eines chemischen Recyclings können die Kunststofffolien beispielsweise in ihre Ausgangsprodukte zerlegt werden. Dies erfordert jedoch einen hohen zeitlichen und energetischen Aufwand und eignet sich daher vor allem für hochwertige Kunststoffprodukte. Da es sich bei Kunststofffolien für Verpackungszwecke jedoch um günstige Massenprodukte handelt, ist ein chemisches Recycling aus wirtschaftlichen Gründen in der Regel nicht vorteilhaft.

Vor diesem Hintergrund kommt dem mechanischen Recycling eine besondere Bedeutung zu. Beim mechanischen Recycling werden Kunststoffabfälle zu Sekundärrohstoffen verarbeitet, ohne die chemische Struktur des Materials wesentlich zu verändern. Hierbei ist es wesentlich, dass das Ausgangsmaterial der Kunststoffabfälle einen besonders geringen Restbestandteil von Fremdpolymeren aufweist, sodass bereits im Vorfeld des Recyclings eine sortenreine Auftrennung der Kunststoffabfälle erforderlich ist. Vor diesem Hintergrund ist es auch ein Bestreben, Kunststoffverpackungen möglichst sortenrein auszubilden, um im nachgeordneten Recyclingprozess eine hohe Qualität von Sekundärrohstoffen bilden zu können.

Der Einsatz von mechanisch recycelten Polymeren in Kunststofffolien ist grundsätzlich bekannt. Eine gattungsgemäße Mehrschichtfolie ist beispielsweise aus der WO 2022/238187 A1 bekannt. Dieses Dokument beschreibt eine im Wesentlichen dreischichtige Kunststofffolie mit zwei Außenlagen aus Polyethylen und einer dazwischen angeordneten Kernlage. Die Außenlagen aus Polyethylen bilden einer Siegelschicht, sodass die Mehrschichtfolie durch Heißsiegeln in einfacher Art und Weise zu einem Verpackungsbeutel geformt werden kann. Wesentlich ist hierbei, dass die Kernschicht zumindest zu 80 % aus einem mechanisch recycelten Polyethylen hoher Dichte (rHDPE) besteht, sodass der wesentliche Anteil des recycelten Materials in der Kernschicht vorliegt. Darüber hinaus ist es aber auch möglich, dass auch die erste Außenlage teilweise oder aber vollständig aus recyceltem Polyethylen niedriger Dichte (LDPE) oder linearem Polyethylen niedriger Dichte (LLDPE) gebildet ist.

Wenngleich sich eine solche Ausgestaltung grundsätzlich bewährt hat, so hat sich auch gezeigt, dass aufgrund des Einsatzes von mechanisch recyceltem HDPE in der Kernlage die mechanischen Eigenschaften beschränkt sind. Hierbei ist zu beachten, dass mechanisch recyceltes HDPE nicht vergleichbar ist mit einem reinem HDPE, welches allgemeinhin auch als Virgin-HDPE bezeichnet wird. Insbesondere weisen mechanisch recycelte Polymere stets einen gewissen Anteil von Restbestandteilen bzw. Verunreinigungen auf, welche sowohl das mechanische als auch das optische Erscheinungsbild daraus hergestellter Folien beeinträchtigen.

Vor diesem Hintergrund liegt der vorliegenden Erfindung die Aufgabe zugrunde, eine Polyolefin-basierte Mehrschichtfolie anzugeben, welche sich gegenüber den bislang bekannten Mehrschichtfolien sowohl durch verbesserte mechanische als auch durch verbesserte optische Eigenschaften auszeichnet.

Gegenstand und Lösung dieser Aufgabe ist eine Polyolefin-basierte Mehrschichtfolie gemäß Patentanspruch 1. Demnach ist erfindungsgemäß vorgesehen, dass die Kernlage zwei Grundschichten aufweist, welche über eine verblockte Verbindungschicht miteinander verbunden sind und wobei die Grundschichten zumindest teilweise aus dem mechanisch recycelten Polyethylen hoher Dichte gebildet sind.

Entsprechend wird die Kernlage im Wesentlichen auf zumindest zwei Grundschichten aufgeteilt, welche das mechanisch recycelte Polyethylen hoher Dichte enthalten. Die Verbindung der beiden Grundschichten erfolgt über eine Verbindungsschicht, welche durch Verblocken gebildet ist. Beim Verblocken werden zwei Folien miteinander, vorzugsweise im erwärmten Zustand - miteinander flächig in Kontakt gebracht und hierdurch dauerhaft miteinander verbunden. Hierbei kommen bevorzugt eine erste und eine zweite Blockschicht miteinander in Kontakt, welche eine nahezu identische, vorzugsweise vollständig identische, Polymerzusammensetzung aufweisen. Die Gleichheit der Polymere garantiert einen besonders guten Zusammenhalt. Beim Verblocken erfolgt die Verbindung der beiden Folien an den Blockschichten ohne Zusatz von Haftvermittlern oder Klebstoffen. Trotz der festen Verbundhaftung liegt aber weiterhin eine definierte Grenzlinie zwischen den beiden Blockschichten vor.

Zur Herstellung wird die Mehrschichtfolie üblicherweise im Rahmen einer Blasextrusion hergestellt. Hierzu wird zunächst ein Materialschlauch gebildet, welcher umlaufend einen identischen Schichtaufbau aufweist. Die innenliegende Schicht wird durch die Blockschicht gebildet. Durch Flachlegen des Materialschlauches liegen dann Abschnitte der Blockschicht aneinander an und verblocken zwei identisch ausgebildete Abschnitte des Materialschlauches miteinander.

Durch eine solche Ausgestaltung wird gewährleistet, dass die Mehrschichtfolie vollständig symmetrisch aufgebaut ist und im Gegensatz zu Lösungen, bei denen die gesamte Kernlage einschichtig vorliegt, aufgrund des hohen Anteils von recyceltem HDPE ein besonders gutes symmetrisches Verhalten aufweist. Dies gilt insbesondere für die Biegesteifigkeit der Mehrschichtfolie. Zugleich wird auch der variierende Einfluss des Kerns deutlich geringer, da etwaige Schwankungen im Hinblick auf die Restbestandteile im HDPE auf die zwei Grundschichten aufgeteilt werden, sodass diese Schwankungen aufgrund des symmetrischen Aufbaus ein Stück weit ausgemittelt werden können.

Darüber hinaus bildet auch die Trennschicht zwischen den beiden Blockschichten in der Verbindungschicht einen vorteilhaften Einfluss aus. Hierbei ist zu beachten, dass infolge der Blasfolienextrusion die Blockschicht an der Innenseite des Materialschlauchs ein Stück weit auskühlt und sich eine "Haut" an der Innenseite des Materialschlauches bildet. Diese Haut bildet einen gewissen Widerstand gegenüber den Grundschichten aus, wodurch vermieden wird, dass sich Fehlstellen in den Grundschichten in einem übermäßigen Maße anisotrop in der Kernlage verteilen. Erst nach Bildung dieser Haut werden dann die Blockschichten miteinander zur Verbindungschicht verbunden, sodass sichergestellt wird, dass sich die Fehlstellen möglichst innerhalb der beiden Grundschichten verteilen. Zudem ermöglicht die Haut bzw. die Trennlinie zwischen den beiden Blockschichten auch einen gewissen mechanischen Anker, sodass die Mehrschichtfolie besonders gut auf Querbelastungen reagieren kann.

Bevorzugt weist die Verbindungsschicht eine Dicke zwischen 10 und 50 µm, besonders bevorzugt zwischen 20 und 40 µm, auf.

Eine bevorzugte Weiterbildung der Erfindung sieht vor, dass der Anteil des mechanisch recycelten Polyethylens hoher Dichte bezogen auf das Gesamtgewicht der Mehrschichtfolie zumindest 10 Gew.-% beträgt. Eine besonders bevorzugte Ausgestaltung sieht vor, dass der Anteil zumindest 20 Gew.-%, besonders bevorzugt zumindest 40 Gew.-% beträgt. Grundsätzlich ist der Anteil des mechanisch recycelten Polyethylens hoher Dichte nach oben hin nicht begrenzt, wobei die Erfindung allerdings gezeigt hat, dass im Hinblick auf die mechanischen Eigenschaften der Anteil des mechanisch recycelten Polyethylens bezogen auf das Gesamtgewicht bevorzugt zwischen 10 und 80 Gew.-%, bevorzugt zwischen 20 und 75 Gew.-% beträgt.

Ausgehend von einer solchen Ausgestaltung kann dann der Anteil des mechanisch recycelten Polyethylens hoher Dichte in der Kernlage zwischen 10 und 80 Gew.-%, bevorzugt zwischen 20 und 75 Gew.-% betragen. Wenngleich es in diesem Zusammenhang durchaus denkbar ist, dass die Kernlage neben dem mechanisch recycelten Polyethylen auch einen Anteil von Virgin-HDPE enthält, so ist gemäß einer bevorzugten Ausgestaltung jedoch vorgesehen, dass als HDPE in der Kernlage ausschließlich das mechanisch recycelte Polyethylen Anwendung findet.

Ausgehend von einer solchen Ausgestaltung weist die Mehrschichtfolie somit zumindest einen 5-schichtigen Aufbau auf, welcher aus den beiden Außenlagen, den beiden Grundschichten sowie der Verbindungschicht besteht. Diese Ausgestaltung unterliegt selbstverständlich der Betrachtung, dass die Verbindungschicht als eine Schicht zu verstehen ist, wenngleich diese aus zwei verblockten Blockschichten gebildet ist. Darüber hinaus ist es aber auch denkbar, dass die Mehrschichtfolie einen 9-schichtigen Aufbau aufweist. Eine solche Ausgestaltung kann dadurch gebildet werden, in dem die Kernlage zusätzlich zumindest zwei zweite Grundschichten aufweist, welche jeweils über eine Zwischenschicht mit einer ersten Grundschicht verbunden sind. Die ersten Grundschichten bilden demnach weiterhin die Schichten, welche unmittelbar an die Verbindungsschicht anschließen, während die zweiten Grundschichten wiederum über eine Zwischenschicht an die erste Grundschicht anschließen und bevorzugt unmittelbar an die Außenlagen angrenzen.

Auch die zweiten Grundschichten sind bevorzugt identisch zueinander ausgebildet. Dies gilt gleichermaßen auch für die Zwischenschichten, sodass sich weiterhin ein symmetrischer Aufbau der Mehrschichtfolie ergibt. Die zweiten Grundschichten können weiterhin identisch gegenüber den ersten Grundschichten ausgebildet sein und entsprechend eine identische Menge des mechanisch recycelten Polyethylens hoher Dichte enthalten. Demnach ist auch für die zweite Grundschicht bevorzugt vorgesehen, dass der Anteil des mechanisch recycelten Polyethylens hoher Dichte zwischen 10 und 80 Gew.-%, insbesondere zwischen 20 und 75 Gew.-% beträgt. Grundsätzlich ist es aber auch denkbar, dass die Menge des mechanisch recycelten Polyethylens zwischen der ersten und der zweiten Grundschicht variiert, wobei aber stets vorgesehen ist, dass zumindest 10 % des mechanisch recycelten Polyethylens hoher Dichte in jeder der ersten und zweiten Grundschichten vorhanden ist.

Darüber hinaus können die erste und die zweite Grundschicht auch eine identische Schichtdicke aufweisen. Insbesondere beträgt die Schichtdicke der ersten Grundschichten zwischen 40 und 90 µm und/oder die Schichtdicke der zweiten Grundschichten zwischen 40 und 90 µm. Besonders bevorzugt beträgt die Schichtdicke der ersten Grundschichten zwischen 50 und 80 µm und/oder die Schichtdicke der zweiten Grundschichten zwischen 50 und 80 µm. Die Zwischenschicht kann ebenfalls analog zu der ersten und/oder der zweiten Grundschicht ausgebildet sein. Demnach kann die Zwischenschicht zwischen 10 und 80 Gew.-%, besonders bevorzugt zwischen 20 und 75 Gew.-% des mechanisch recycelten Polyethylens hoher Dichte enthalten. Die Dicke der Zwischenschicht beträgt bevorzugt zwischen 40 und 90 µm, besonders bevorzugt zwischen 50 und 80 µm.

Wenngleich es im Rahmen der Erfindung von besonderer Bedeutung ist, dass ein möglichst hoher Anteil von mechanisch recyceltem Polyethylen hoher Dichte in der Kernlage eingebunden ist, so ist es bevorzugt vorgesehen, dass die Kernlage nicht ausschließlich aus dem mechanisch recycelten Polyethylen hoher Dichte gebildet ist. Dies gilt gleichermaßen auch für die ersten und/oder zweiten Grundschichten. Insbesondere ist vorgesehen, dass die Kernlage zwischen 20 und 90 Gew.-%, insbesondere zwischen 25 und 80 Gew.-% zumindest eines weiteren Polyolefins, bevorzugt eines Polyethylens, enthält.

Hierbei kann es grundsätzlich ausreichend sein, ausschließlich ein weiteres Polyolefin vorzusehen. Darüber hinaus können aber auch zwei oder mehr weitere Polyolefine, insbesondere Polyethylene, in der Kernlage bzw. in den ersten Grundschichten und/oder den zweiten Grundschichten und/oder der Zwischenschicht eingebunden sein. Das zumindest eine weitere Polyolefin ist hierbei ausgewählt aus der Gruppe Polypropylen, Polyethylen niedriger Dichte (LDPE) und lineares Polyethylen niedriger Dichte (LLDPE). Eine Ausgestaltung mit linearem Polyethylen niedriger Dichte ist besonders bevorzugt.

Das weitere Polyolefin kann ebenfalls als mechanisch recyceltes Polyolefin bereitgestellt werden. Im Rahmen der Erfindung ist es aber auch ausreichend, wenn das zumindest eine weitere Polyolefin als Virgin-Polyolefin, insbesondere Virgin-Polyethylen, bereitgestellt wird.

Grundsätzlich wird im Rahmen der Erfindung von der gewöhnlichen Aufteilung von Polyethylen ausgegangen, wobei LDPE eine Dichte zwischen 0,915 und 0,927 g/cm³, MDPE ein Dichte zwischen 0,928 und 0,94 g/cm³ und HDPE eine Dichte zwischen 0,941 und 0,963 g/cm³ aufweist. Lineares Polyethylen niedriger Dichte weist üblicherweise eine Dichte zwischen 0,918 und 0,927 g/cm³ auf.

Im Rahmen der Erfindung ist darüber hinaus vorgesehen, dass der Anteil von Fremdpolymeren möglichst gering gehalten wird. Insbesondere ist vorgesehen, dass der Anteil von nicht-Polyolefin-basierten Polymeren kleiner als 5 Gew.-% bezogen auf die Mehrschichtfolie ist. Dementsprechend sind auch die Außenlagen bevorzugt aus einem Polyolefin, insbesondere aus einem Polyethylen, gebildet. Insbesondere ist zumindest eine der Außenlagen, insbesondere aber beide Außenlagen, aus zumindest einem heißsiegelbaren nicht-recycelten Polyolefin gebildet. Bei diesem Polyolefin handelt es sich insbesondere um ein Polyethylen, bevorzugt um ein Polyethylen niedriger Dichte oder lineares Polyethylen niedriger Dichte oder um Mischungen hieraus.

Die Außenlagen sollen insbesondere das Einbringen von Heißsiegelnähten ermöglichen. Im Zuge des Heißsiegelns wird durch Ausübung von Druck und Temperatur entlang einer Heißsiegelnaht das Material in den Außenlagen lokal aufgeschmolzen und durch Anpressen an eine weitere Lage aufgeschmolzenen Materials verschweißt. Hierbei ist es von entscheidender Bedeutung, dass das Material der Außenlagen möglichst wenige Fehlstellen aufweist, da diese den mechanischen Halt der Heißsiegelnähte beeinträchtigen können. Vor diesem Hintergrund ist im Rahmen der Erfindung insbesondere nicht-recyceltes Polyethylen bzw. Virgin-PE in den Außenlagen vorgesehen, um die mechanische Festigkeit der Heißsiegelnaht zu gewährleisten. Insbesondere ist vorgesehen, dass die Außenlagen ausschließlich aus Virgin-LDPE und/oder Virgin-LLDPE gebildet sind. Hierdurch wird sichergestellt, dass die Außenlagen gegenüber der Kernlage eine geringere Schmelztemperatur aufweisen, sodass lediglich ein lokales Aufschmelzen der Außenlage erfolgt. Die Außenlagen weisen bevorzugt eine Dicke zwischen 10 und 30 µm auf.

Im Gegensatz zur Verwendung von reinem Virgin-HDPE in der Kernlage ist die Auswahl eines geeigneten mechanisch recycelten Polyethylens hoher Dichte entscheidend für die mechanischen und optischen Eigenschaften der Mehrschichtfolie. Wie bereits zuvor erläutert, weisen mechanisch recycelte Polymere, insbesondere mechanisch recyceltes Polyethylen hoher Dichte, einen gewissen Anteil von Restbestandteilen, insbesondere von Polypropylen, auf. Dieser Anteil lässt sich grundsätzlich niemals vollständig ausschließen, sodass bereits anhand der Tatsache, dass Restbestandteile vorhanden sind, in einfacher Art und Weise festgestellt werden kann, ob es sich bei dem verwendeten Polyethylen hoher Dichte um ein Virgin-HDPE oder um ein mechanisch recyceltes HDPE handelt. Zugleich sollten die Restbestandteile jedoch möglichst gering sein, um eine Mehrschichtfolie mit guten mechanischen und optischen Eigenschaften ausbilden zu können. Vor diesem Hintergrund sieht eine bevorzugte Ausgestaltung vor, dass das recycelte Polyethylen hoher Dichte zwischen 0,1 und 5 Gew.-%, bevorzugt zwischen 0,5 und 2 Gew.-%, Restbestandteile, insbesondere Polypropylen, aufweist.

Neben guten mechanischen Eigenschaften kann das mechanisch recycelte Polyethylen aufgrund der geringen Restbestandteile auch eine hohe Farbtreue aufweisen. Die Farbgebung wird hierbei gewöhnlich im L,a,b-Farbraum angegeben, wobei der L-Wert den Helligskeitsgrad abbildet. Ein L-Wert von 100 steht entsprechend für ein weißes Polymer, während ein Polymer mit einem L-Wert von 0 vollständig schwarz ist. Die Farbe wird dann im Wesentlichen über den A- und B-Wert festgelegt. Der A-Wert gibt die Farbart zwischen grün und rot an und der B-Wert die Farbart zwischen blau und gelb.

Gemäß einer bevorzugten Ausgestaltung weist das recycelte Polyethylen hoher Dichte einen L-Wert größer als 55, bevorzugt größer als 65, auf. Im Hinblick auf mechanisch recycelte Polymere stellt dies einen sehr hohen Wert dar, der es ermöglicht, eine Mehrschichtfolie zu bilden, welche gegenüber Folien aus reinen Virgin-Polymeren allenfalls eine milchige Eintrübung aufweist. Diese milchige Eintrübung kann allerdings im Rahmen der Erfindung durchaus gewünscht sein, um dem Verbraucher mitzuteilen, dass es sich um ein Verpackungsmaterial handelt, welches den Einsatz einer gewissen Menge von recycelten Polymeren beinhaltet. Zugleich ist diese Eintrübung vergleichsweise gering und ermöglicht noch immer das Ausbilden von optisch hochwertigen Mehrschichtfolien, da das Material selbst vergleichsweise hell ist.

Darüber hinaus sieht eine bevorzugte Ausgestaltung vor, dass die Mehrschichtfolie selbst durch einen L-Wert von zumindest 75, besonders bevorzugt von zumindest 80, gekennzeichnet ist. Hierbei wird sich selbstverständlich auf eine Messung auf den Oberflächen der Folie bezogen. Diese Oberflächen werde durch die Außenlagen gebildet.

Eine bevorzugte Weiterbildung der Erfindung sieht ferner vor, dass das recycelte Polyethylen hoher Dichte eine Schmelze-Massefließrate (MFR) von weniger als 0,5 g/10 min, bevorzugt weniger als 0,2 g/10 min, aufweist.

Gegenstand der Erfindung ist ferner ein Verpackungsbeutel mit einem Beutelkörper aus einer erfindungsgemäßen Polyolefin-basierten MehrschichtFolie. Der Beutelkörper ist vorzugsweise aus zwei gegenüberliegenden Frontwänden aus der erfindungsgemäßen Mehrschichtfolie gebildet, wobei die Frontwände entlang von Längssiegelnähten unmittelbar oder unter Einbindung von Seitenfaltenabschnitten miteinander verbunden sind. An einem oberen Ende ist der Beutelkörper üblicherweise über eine Quersiegelnaht verschlossen. Auch am unteren Ende des Beutelkörpers können die Frontwände unmittelbar oder unter Einbeziehung einer Bodenfalte über Heißsiegelnähte miteinander verbunden sein.

Ausgehend von einer solchen Ausgestaltung sind die aus der Mehrschichtfolie gebildeten Frontwände über Außenlagen miteinander verbunden, sodass entsprechend diese Außenlagen unmittelbar an den Beutelinnenraum angrenzen.

Eine bevorzugte Weiterbildung der Erfindung sieht vor, dass ein gedruckter Materialabschnitt zumindest abschnittsweise auf dem Beutelkörper angeordnet ist. Dieser Materialabschnitt ist nicht oder zumindest nicht hauptsächlich zu einer Verstärkung des Beutelkörpers, sondern vielmehr zur Aufnahme eines Aufdrucks vorgesehen, während der Beutelkörper selbst vorzugsweise nicht bedruckt ist. Entsprechend handelt es sich bei dem Materialabschnitt um einen bedruckten Materialabschnitt. Über den Materialabschnitt kann dann ein hochwertiges optisches äußeres Erscheinungsbild des Verpackungsbeutels ermöglicht werden, während der Beutelkörper selbst aufgrund des Anteils aus einem mechanisch recycelten Polyethylen hoher Dichte optisch in den Hintergrund tritt.

Dennoch ist vorgesehen, dass der Materialabschnitt lediglich bereichsweise auf dem Beutelkörper angeordnet ist, sodass der Beutelkörper selbst zumindest abschnittsweise in Erscheinung tritt und wobei aufgrund des milchigen Aussehens dem Verbraucher unmittelbar mitgeteilt wird, dass der Beutelkörper einen gewissen Anteil von recycelten Polymeren enthält. Der Beutelkörper ist vorzugsweise vollständig unbedruckt. Dies hat den Vorteil, dass der Materialabschnitt nach Entnahme von dem Beutelkörper einem separaten Recycling-Prozess zugeführt werden kann. Durch das Weglassen von Druckfarbe ist es möglich, den Beutelkörper nahezu vollständig zu recyceln und somit erneut einer Verwertung zuzuführen.

Der Materialabschnitt kann in unterschiedlicher Art und Weise auf dem Beutelkörper angeordnet werden. Gemäß einer ersten Ausgestaltungsform kann der Materialabschnitt einen Abstand zum oberen und unteren Rand aufweisen. Alternativ ist es aber auch möglich, den Materialabschnitt bis zum oberen und unteren Rand sowie bis zu den Seitenrändern zu erstrecken und zugleich an jedem der Ränder zu befestigen. Ausgehend von einer solchen Ausgestaltung ist dann an jedem der Ränder zumindest ein Befestigungsabschnitt vorgesehen. Vorzugsweise sind die Befestigungsabschnitte in einem mittleren Bereich des jeweiligen oberen und unteren Endes sowie der Seitenränder angeordnet. Unter einem mittleren Abschnitt wird in diesem Zusammenhang ein Abschnitt verstanden, welcher außerhalb der Eckbereiche angeordnet ist.

Unabhängig von der konkreten Anordnung des Materialabschnittes erfolgt vorzugsweise eine Befestigung des Materialabschnittes über die Außenlage der Mehrschichtfolie. Dies kann beispielsweise durch Heißsiegeln erfolgen. Die hierdurch gebildete Heißsiegelnaht kann entweder peelbar oder aber auch nicht-peelbar ausgebildet sein. Im Falle einer peelbaren Befestigungsnaht ist es möglich, die Befestigungsnaht aufzutrennen, sodass der Materialabschnitt im Gesamten von dem Beutelkörper entnehmbar ist. Im Falle einer nicht-peelbaren Befestigungsnaht ist der Materialabschnitt integral mit der Mehrschichtfolie verbunden, sodass beim Aufbringen mechanischer Kräfte der Befestigungsabschnitt nicht in der Befestigungsnaht, sondern vielmehr in Bereichen außerhalb der Befestigungsnaht erfolgt. Um dennoch ein Entfernen des Materialabschnittes zu ermöglichen, kann vorgesehen sein, dass benachbart zur Befestigungsnaht eine Materialschwächung z. B. eine Perforation vorgesehen ist, welche ein definiertes Abreißen des Materialabschnittes ermöglicht.

Ausgehend von einer solchen Ausgestaltung kann der Bereich des Materialabschnittes im Bereich der Befestigungsnaht vorzugsweise unbedruckt sein, um ein gemeinsames Recycling mit dem Beutelkörper zu ermöglichen.

Gegenstand der Erfindung ist ferner ein Verfahren zur Herstellung eines erfindungsgemäßen Verpackungbeutels, umfassend die Schritte:
- Coextrusion eines Materialsschlauches, welcher in Außenlage, eine Blockschicht und zumindest eine dazwischen angeordnete Grundschicht aufweist.
- Herstellen einer Mehrschichtfolie durch Verblocken der Blockschichten des Materialsschlauches miteinander. Durch Verblocken der Blockschichten bilden die Blockschichten gemeinsam eine Verbindungschicht aus.
- Herstellen eines Beutelkörpers aus der Mehrschichtfolie.

Im Zuge der Coextrusion ist vorgesehen, dass zumindest ein Anteil mechanisch recycelten Polyethylens hoher Dichte in einer der Schichten des Materialschlauches eingebunden wird. Hierbei handelt sich insbesondere um die zumindest eine Grundschicht, welche zwischen der Blockschicht und der Außenlage angeordnet ist. Entsprechend können vor der Coextrusion die schritte vorgesehen sein: Bereitstellen eines polyethylenhaltigen Ausgangsmaterials, mechanisches Recyceln des Ausgangsmaterials zur Gewinnung von mechanisch recycelten Polyethylen.

Gemäß einer Weiterbildung wird anschließend ein bedruckter Materialabschnitt an dem Beutelkörper, insbesondere durch Heißsiegeln, befestigt.

Die Erfindung wird nachfolgend anhand von exemplarischen Zeichnungen näher erläutert. Es zeigen:
- Fig. 1: einen erfindungsgemäßen Verpackungsbeutel in einer isometrischen Darstellung,
- Fig. 2: eine erfindungsgemäße Mehrschichtfolie für einen Verpackungsbeutel gemäß Fig. 1 mit einem 5-schichtigen Aufbau in einer Schnittdarstellung,
- Fig. 3: eine alternative Ausgestaltung der erfindungsgemäßen Mehrschichtfolie mit einem 9-schichtigen Aufbau in einer Schnittdarstellung.

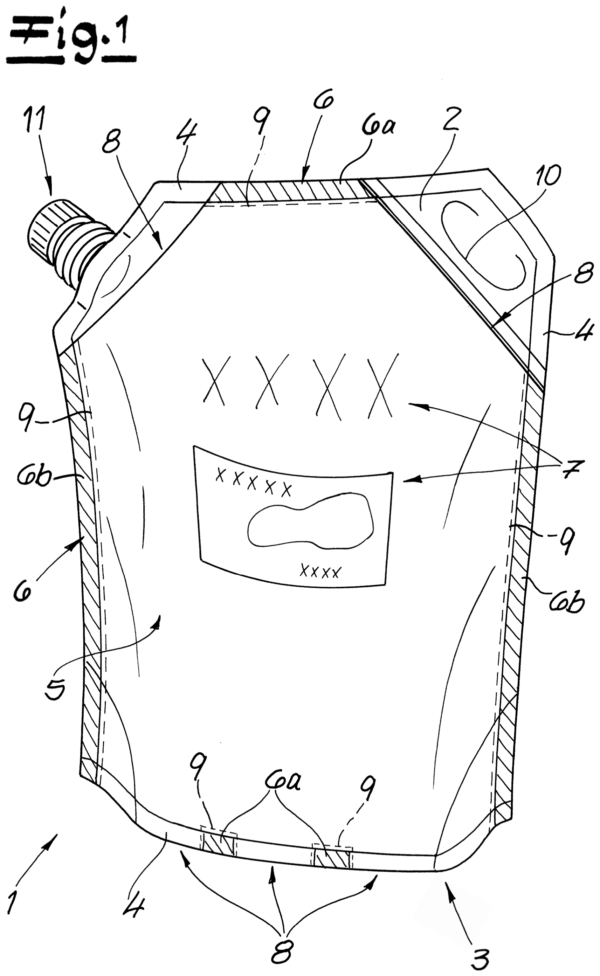

Die Fig. 1 zeigt einen erfindungsgemäßen Verpackungsbeutel in einem befüllten und verschlossenen Zustand.

Der Verpackungsbeutel weist einen Beutelkörper 1 mit zwei einander gegenüberliegenden Frontwänden 2 und einer zwischen den Frontwänden angeordneten Bodenfalte 3 auf. Die Frontwände 2 sind durch Verbindungsnähte 4 untereinander sowie mit der Bodenfalte 3 verbunden.

Des Weiteren ist zu erkennen, dass auf der in der Zeichnung vorderen Frontwand 2 ein separater bedruckter Materialabschnitt 5 angeordnet ist. Die Befestigung auf der zugeordneten Frontwand 2 erfolgt über eine Befestigungsnaht 6, welche mit der darunterliegenden Verbindungsnaht 4 in Deckung ist.

Sowohl die Verbindungsnähte 4 als auch die Befestigungsnaht 6 sind durch Heißsiegeln gebildet. Entsprechend weist das Material für den Beutelkörper sowohl auf einer innenliegenden als auch auf einer außenliegenden Seite ein heißsiegelbares Material auf.

Während der Materialabschnitt 5 in einem mittleren Bereich mit einem Aufdruck 7 versehen ist, sind die Ränder des Materialabschnittes 5 sowie der gesamte Beutelkörper 1 unbedruckt.

Gemäß der Ausgestaltung in der Fig. 1 weist die Befestigungsnaht 6 um den umlaufenden Rand des Materialabschnittes 5 insgesamt fünf Befestigungsabschnitte 6a, 6b auf, welche durch unverbundene Bereiche 8 voneinander getrennt sind. Des Weiteren ist zu erkennen, dass ausgehend von einer in etwa rechteckigen Form des Materialabschnittes 5 obere Ecken schräg in einem Winkel von etwa 45° abgetrennt sind.

Die beiden unverbundenen Bereiche 8 mit der größten unverbundenen Länge befinden sich im Bereich der oberen Beutelecken, wobei durch einen Benutzer leicht zwischen den Materialabschnitt 5 und die darunterliegende Frontwand 2 gegriffen werden kann. Für eine Entsorgung des Folienbeutels kann ein Benutzer dann einen Großteil des Materialabschnittes 5 von dem Beutelkörper 1 abreißen. Zu diesem Zweck ist vorgesehen, dass die Befestigungsnaht permanent, d. h. unpeelbar ist, wobei entlang der Befestigungsnaht 6, d. h. üblicherweise parallel zur Befestigungsnaht 6, eine Aufreißlinie 9 in Form einer Materialschwächung verläuft.

Die Materialschwächung kann auf unterschiedliche Art und Weise gebildet werden. Möglich sind beispielsweise eine Perforation und/oder eine Reduzierung der Dicke und/oder eine Materialversprödung, beispielsweise durch die Bestrahlung mit einem Laser oder die Zufuhr von Wärme.

Nach dem Gebrauch des Verpackungsbeutels kann zur Entsorgung der Benutzer in einer oberen Beutelecke zwischen den Materialabschnitt 5 und die zugeordnete Frontwand 2 eingreifen und den Materialabschnitt 5 abziehen. Hierdurch lässt sich der Beutelkörper 1 separat von dem Materialabschnitt 5 recyceln. Vor diesem Hintergrund endet bevorzugt auch der Aufdruck 7 vor der Aufreißlinie 9, sodass der Beutelkörper 1 völlig ohne Druckfarbe verbleiben kann. Hierdurch wird das Recycling besonders vereinfacht.

Gemäß dem dargestellten Ausführungsbeispiel ist der Verpackungsbeutel für die Aufnahme von Flüssigkeiten, wie beispielsweise Waschmittel, Shampoo, Conditioner, Reinigungsmittel oder sonstige Haushaltschemikalien vorgesehen, wobei dieser Einsatzzweck lediglich exemplarisch ist. Die erfindungsgemäße Ausgestaltung ist auch für andere Verpackungsbeutel geeignet.

Gemäß der Fig. 1 weist der Beutelkörper 1 zusätzlich einen Grifföffnung 10 auf, welche durch eine Einstanzung in einem abgesiegelten Bereich des Beutelkörpers 1 gebildet ist. Darüber hinaus weist der Beutelkörper 1 auch einen Ausgießer 11 auf, wobei auch alternative Funktionsausformungen, wie beispielsweise Wiederverschlüsse, vorgesehen sein können.

Da das optische Erscheinungsbild des Verpackungsbeutels maßgeblich über den bedruckten Materialabschnitt 5 definiert wird, ist es möglich, den Beutelkörper 1 selbst möglichst ressourcenschonend herzustellen. Vor diesem Hintergrund sieht die Erfindung vor, dass eine Polyolefin-basierte Mehrschichtfolie für den Beutelkörper 1 verwendet wird, welche zumindest zu einem Teil aus einem mechanisch recycelten Polyethylen hoher Dichte (rHDPE) gebildet ist.

Mechanisch recycelte Polymere weisen den Nachteil auf, dass sie stets eine gewisse Menge an Restbestandteilen aufweisen, welche dazu führen, dass das Polymer sowohl in mechanischer als auch in optischer Hinsicht gegenüber Virgin-Polymeren benachteiligt ist. Im konkreten Fall führt das Vorhandensein von Restbestandteilen zu einer gewissen Eintrübung der Mehrschichtfolie und damit des Beutelkörpers 1, welche im Rahmen der Erfindung aber durchaus gewollt ist. So überdeckt der Materialabschnitt 5 den Beutelkörper 1 auf der vorderen Frontwand 2 lediglich abschnittsweise, wobei die rückseitige Frontwand 2 vollständig frei von einem Materialabschnitt 5 ausgebildet sein kann. Entsprechend ist der Beutelkörper 1 für den Verbraucher durchaus sichtbar. Durch die Eintrübung des Materials kann dem Verbraucher in einfacher Art und Weise mitgeteilt werden, dass das Material ressourcenschonend und unter Einsatz von recycelten Materialien hergestellt wurde, während zugleich der Verpackungsbeutel über den bedruckten Materialabschnitt 5 ein hohes optisches Erscheinungsbild aufweist.

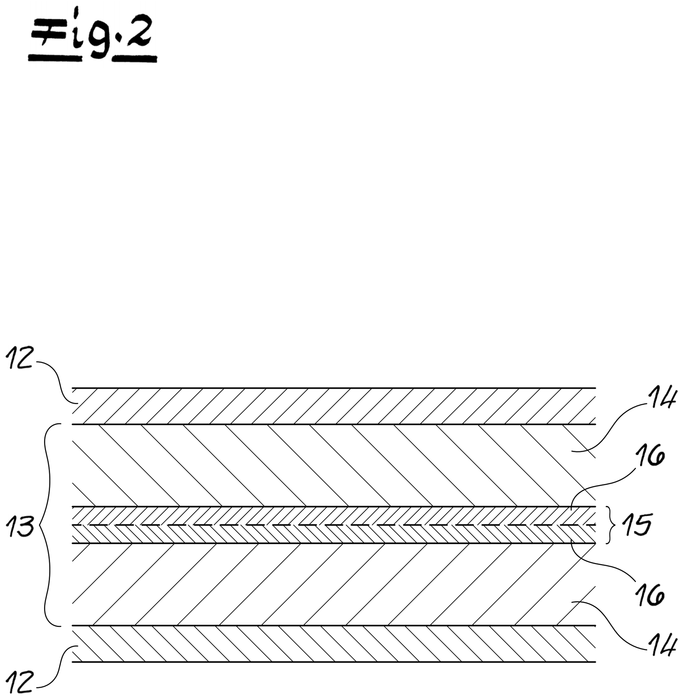

Die Fig. 2 zeigt in diesem Zusammenhang die Ausgestaltung der Mehrschichtfolie, welche für die Herstellung des Beutelkörpers 1 verwendet wurde. Die Mehrschichtfolie weist einen 5-schichtigen Aufbau auf, wobei die Mehrschichtfolie zwei Außenlagen 12 sowie eine dazwischen angeordnete Kernlage 13 aufweist.

Die Außenlagen 12 sind vorzugsweise als Siegelschichten ausgebildet und bestehen entsprechend aus einem heißsiegelbaren Material. Hierbei kann es sich insbesondere um Polyethylen, z. B. Polyethylen niedriger Dichte (LDPE), lineares Polyethylen niedriger Dichte (LLDPE) oder Mischungen hieraus handeln. Entsprechend können dann die daraus gebildeten Frontwände 1 an den Verbindungsnähten 4 miteinander bzw. mit der Bodenfalte 3 verbunden werden. Zugleich ist aber auch eine Heißsiegelung an der Außenseite möglich, sodass der Materialabschnitt 5 in einfacher Art und Weise über die Befestigungsnähte 6 mit den Frontwänden 2 verbunden werden kann.

Die Außenlagen 12 sind vorzugsweise ausschließlich aus einem oder mehreren nicht-mechanisch recycelten Polyethylenen gebildet. Hierdurch wird sichergestellt, dass aufgrund des Fehlens von Restbestandteilen die Verbundhaftung der Frontwände 2 untereinander sowie mit dem Materialabschnitt 5 in jedem Zeitpunkt sichergestellt ist.

Der Einsatz von mechanisch-recycelten Polymeren erfolgt sodann über die Kernlage 13. Die Kernlage 13 weist zwei Grundschichten 14 sowie eine dazwischen angeordnete Verbindungschicht 15 auf. Die Verbindungschicht 15 weist die Besonderheit auf, dass diese aus ursprünglich zwei Blockschichten 16 gebildet ist, welche gemeinsam durch Verblocken die Verbindungschicht 15 bilden. Entsprechend liegt im Zuge der Herstellung ursprünglich ein dreischichtiger Aufbau bestehend aus einer Außenlage 12 einer Grundschicht 14 und einer Blockschicht 16 vor. Dieser Aufbau liegt üblicherweise in Form eines Materialschlauches vor, welcher dann im Zuge eines Flachlegens an den Blockschichten 16 miteinander verblockt. Dies hat zur Folge, dass die Mehrschichtfolie einen symmetrischen Aufbau aufweist, welcher hinsichtlich der mechanischen Eigenschaften der Mehrschichtfolie von besonderer Bedeutung ist.

Zugleich wird durch eine solche Ausgestaltung sichergestellt, dass die Grundschichten 14 in einem ausreichenden Maße über die Außenlagen 12 einerseits und zugleich auch über die Verbindungschicht 15 zueinander abgegrenzt sind, wodurch eine Mittelung von etwaigen Störfaktoren erfolgen kann. Dies ist gerade vor dem Hintergrund wesentlich, dass die Grundschichten 14 einen Anteil eines mechanisch recycelten Polyethylens hoher Dichte aufweisen, wobei dieser Anteil zwischen 10 und 80 Gew.-%, insbesondere zwischen 20 und 75 Gew.-% betragen kann. Die weiteren Bestandteile können dann insbesondere weitere Polyolefine sein. Besonders bevorzugt sind in diesem Zusammenhang erneut ein lineares Polyethylen niedriger Dichte (LDPE), ein lineares Polyethylen niedriger Dichte (LLDPE) und/oder Mischungen hieraus. Diese weiteren Polyethylene können ebenfalls aus mechanisch recycelten Materialien gebildet sein.

Als mechanisch recyceltes HDPE kommt in diesem Zusammenhang ein besonders hochwertiges Material zum Einsatz, welches Restbestandteile zwischen 0,1 und 5 Gew.-%, bevorzugt zwischen 0,5 und 2 Gew.-% aufweist. Hierdurch sind die mechanischen Eigenschaften gegenüber Virgin-Materialien nur geringfügig beeinträchtigt. Zugleich weisen diese Materialien auch ein hochwertiges optisches Erscheinungsbild auf, da die Restbestandteile das Material nur sehr geringfügig eintrüben. Insbesondere ist vorgesehen, dass ausgehend von einer Betrachtung im L,a,b-Farbraum das recycelte Polyethylen hoher Dichte eine Farbgebung aufweist, bei der der L-Wert größer als 55, bevorzugt größer als 65, ist. Auf den durch die Außenlagen 12 gebildeten Oberflächen beträgt der L-Wert zumindest 75, bevorzugt zumindest 80.

Aufgrund der verblockten Herstellungsweise sind die Außenlagen 12 untereinander sowie die Grundschichten 14 untereinander identisch ausgebildet.

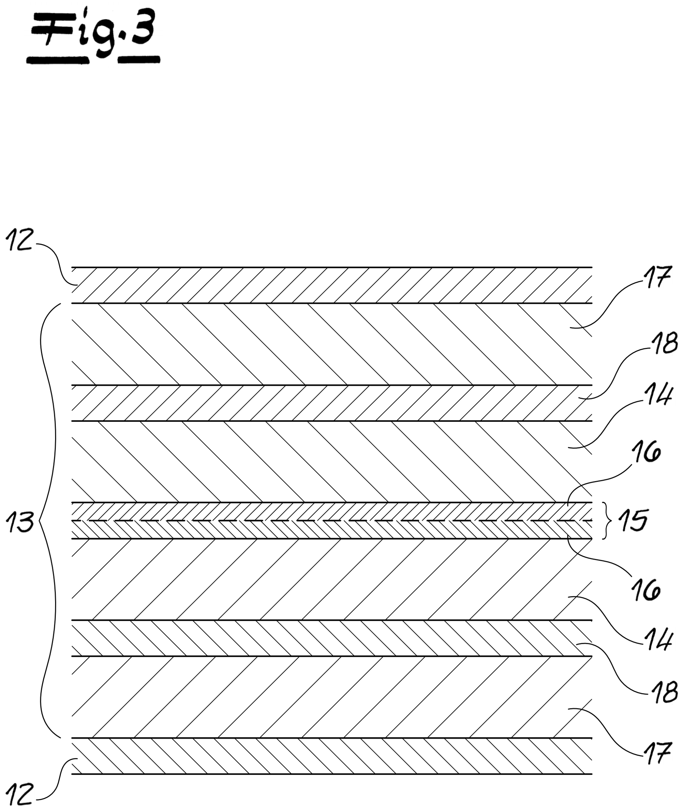

Die Fig. 3 zeigt eine alternative Ausgestaltung, bei der nunmehr erste Grundschichten 14 sowie zweite Grundschichten 17 vorgesehen sind. Die ersten Grundschichten 14 schließen weiterhin unmittelbar an die Verbindungschicht 15 an. Die zweiten Grundschichten schließen an die Außenanlagen 12 an und sind über eine Zwischenschicht 18 jeweils mit der ersten Grundschicht 14 verbunden. Die ersten und die zweiten Grundschichten 14, 17 können identisch ausgebildet sein. Insbesondere ist vorgesehen, dass auch die zweiten Grundschichten 17 zumindest teilweise aus einem mechanisch recycelten Polyethylen hoher Dichte gebildet sind. Der Anteil des mechanisch recycelten Polyethylens hoher Dichte in den zweiten Grundschichten 17 beträgt zwischen 10 und 80 Gew.-%, insbesondere zwischen 20 und 75 Gew.-%. Darüber hinaus können auch hier weitere Polymere vorgesehen sein, wobei diese bevorzugt aus Polyethylen, insbesondere Polyethylen niedriger Dichte, lineares Polyethylen niedriger Dichte und/oder Mischungen hieraus bestehen. Auch die weiteren Polymere können aus mechanisch recycelten Materialien gebildet sein.

Unabhängig von der konkreten Ausgestaltung der Mehrschichtfolie weisen die Außenlagen 12 eine Dicke zwischen 10 und 30 µm, die Grundschichten 14, 17 eine Dicke zwischen 50 und 80 µm und die Verbindungsschicht 15 eine Dicke zwischen 20 und 40 µm auf.

## Patentansprüche

1. Polyolefin-basierte Mehrschichtfolie mit zwei Außenlagen (12) und einer zwischen den Auslagen angeordneten Kernlage (13), wobei die Kernlage (13) zumindest teilweise aus einem mechanisch recycelten Polyethylen hoher Dichte (rHDPE) gebildet ist,
**dadurch gekennzeichnet, dass**
die Kernlage (13) zwei Grundschichten (14) aufweist, welche über eine verblockte Verbindungsschicht miteinander verbunden sind und wobei die Grundschichten (14) zumindest teilweise aus dem mechanisch recycelten Polyethylen hoher Dichte gebildet sind.

2. Polyolefin-basierte Mehrschichtfolie nach Anspruch 1, **dadurch gekennzeichnet, dass** der Anteil des mechanisch recycelten Polyethylens hoher Dichte bezogen auf das Gesamtgewicht zumindest 10 Gew-% beträgt.

3. Polyolefin-basierte Mehrschichtfolie nach Anspruch 1 oder 2, **dadurch gekennzeichnet, dass** der Anteil des mechanisch recycelten Polyethylens hoher Dichte in der Kernlage (13) zwischen 10 und 80 Gew-% beträgt.

4. Polyolefin-basierte Mehrschichtfolie nach einem der vorangegangenen Ansprüche, **dadurch gekennzeichnet, dass** die Kernlage (13) zumindest zwei zweite Grundschichten (17) aufweiset, welche jeweils über eine Zwischenschicht mit einer ersten Grundschicht (14) verbunden sind.

5. Polyolefin-basierte Mehrschichtfolie nach Anspruch 4, **dadurch gekennzeichnet, dass** die zweite Grundschicht (17) und bevorzugt auch die Zwischenschicht das mechanisch recycelte Polyethylen hoher Dichte (HDPE) enthält.

6. Polyolefin-basierte Mehrschichtfolie nach einem der vorangegangenen Ansprüche, **dadurch gekennzeichnet, dass** die Kernlage (13) zusätzlich zwischen 20 und 90 Gew.-% zumindest eines weiteren Polyolefins enthält.

7. Polyolefin-basierte Mehrschichtfolie nach Anspruch 6, **dadurch gekennzeichnet, dass** das zumindest eine weitere Polyolefin ausgewählt ist aus der Gruppe Polypropylen, Polyethylen niedriger Dichte (LDPE) und lineares Polyethylen niedriger Dichte (LLDPE).

8. Polyolefin-basierte Mehrschichtfolie nach Anspruch 6, **dadurch gekennzeichnet, dass** die erste Grundschicht (14) und/oder die zweite Grundschicht (14) und/oder die Zwischenschicht zumindest ein weiteres Polyolefin enthält.

9. Polyolefin-basierte Mehrschichtfolie nach einem der vorangegangenen Ansprüche, **dadurch gekennzeichnet, dass** die Außenlagen und/oder die Verbindungsschicht aus einem heißsiegelbaren nicht-recycelten Polyolefin, insbesondere Polyethylen (LDPE, LLDPE) gebildet sind.

10. Polyolefin-basierte Mehrschichtfolie nach einem der vorangegangenen Ansprüche, **dadurch gekennzeichnet, dass** das recycelte Polyethylen hoher Dichte zwischen 0,1 und 5 Gew.-%, bevorzugt zwischen 0,5 und 2 Gew.-%, Restbestandteile aufweist.

11. Polyolefin-basierte Mehrschichtfolie nach einem der vorangegangenen Ansprüche, **dadurch gekennzeichnet, dass** das recycelte Polyethylen hoher Dichte in einem L,a,b-Farbraum eine Farbgebung aufweist, bei der der L-Wert größer als 55, bevorzugt größer als 65, ist.

12. Polyolefin-basierte Mehrschichtfolie nach einem der vorangegangenen Ansprüche, **dadurch gekennzeichnet, dass** das recycelte Polyethylen hoher Dichte eine Schmelze-Massefließrate (MFR) von weniger als 0,5 g/10 min, bevorzugt weniger als 0,2 g/10 min, aufweist.

13. Verpackungsbeutel, insbesondere Standbodenbeutel, mit einem Beutelkörper (1) aus einer Polyolefin-basierten Mehrschichtfolie nach einem der vorangegangenen Ansprüche.

14. Verpackungsbeutel nach Anspruch 13, **dadurch gekennzeichnet, dass** ein bedruckter Materialabschnitt (5) zumindest abschnittsweise auf dem Beutelkörper (1) angeordnet ist.

15. Verpackungsbeutel nach Anspruch 14, **dadurch gekennzeichnet, dass** der Materialabschnitt (5) mit einer Außenlage (12) der Mehrschichtfolie zumindest abschnittsweise versiegelt ist.

16. Verfahren zur Herstellung eines Verpackungsbeutels nach einem der Ansprüche 13 bis 15, umfassend die Schritte:
- Coextrusion eines Materialschlauches, welcher eine Außenlage (12), eine Blockschicht (16) und zumindest eine dazwischen angeordnete Grundschicht (14) aufweist,
- Herstellen einer Mehrschichtfolie durch Verblocken der Blockschichten (16) des Materialschlauches miteinander
- Herstellen eines Beutelkörpers (1) aus der Mehrschichtfolie.

17. Verfahren nach Anspruch 16, wobei im Zuge der Coextrusion ein mechanisch recyceltes HDPE in zumindest einer der Schichten des Materialschlauches eingebunden wird.

18. Verfahren nach Anspruch 16 oder 17, wobei anschließend ein bedruckter Materialabschnitt (5) an dem Beutelkörper (1), insbesondere durch Heißsiegeln, befestigt wird.
